# EUROPÄISCHE PATENTSCHRIFT

(11) **EP 4 176 721 B1**
(45) Veröffentlichungstag und Bekanntmachung des Hinweises auf die Patenterteilung: **07.01.2026**
(21) Anmeldenummer: 21206207.9
(22) Anmeldetag: 03.11.2021
(51) Int. Cl.: A01N 47/12, A01N 25/04, A01N 25/10, A01N 25/22, A01P 1/00, A01P 3/00

(54) **BIOZIDE POLYMERMISCHUNGEN**
BIOCIDAL POLYMER BLENDS
MÉLANGES DE POLYMÈRES BIOZIDES

(43) Veröffentlichungstag der Anmeldung: 10.05.2023
(73) Patentinhaber: LANXESS Deutschland GmbH, 50569 Köln (DE)
(72) Erfinder: Möws, Katrin, 44137 Dortmund (DE)

(56) Entgegenhaltungen:
- EP-A1- 2 236 033
- EP-A1- 2 270 087
- EP-A1- 2 462 805
- EP-A1- 2 594 132

## Beschreibung

Die Erfindung betrifft Mischungen aus lodpropargylverbindungen und Stickstoff enthaltenden Polymeren mit wenigstens zwei beta-Aminoaminfunktionen, die Herstellung dieser Mischungen und die Verwendung dieser Mischungen zum Schutz von technischen Materialien gegen die Zerstörung durch Mikroorganismen, sowie die mit diesen Mischungen ausgerüsteten technischen Materialien.

lodpropargylverbindungen, insbesondere 3-Iod-2-propinyl-butyl-carbamat (IPBC), werden als Biozide zum Schutz technischer Materialien, wie zum Beispiel von Holz, vor dem Befall, der Zersetzung, Zerstörung und optischen Veränderung durch Pilze, Bakterien und Algen eingesetzt. Vielen lod- propargylverbindungen ist gemeinsam, dass sie sich unter Lichteinwirkung selbst in Substanz oder als Komponente eines technischen Materials unter Gelbfärbung zersetzen, was sowohl die biozide Ausstattung als auch die Haptik des zu schützenden Materials massiv beeinträchtigt. Zudem werden diese Biozide häufig in der Gegenwart von Übergangsmetallverbindungen in Farben, Lacken und Lasuren eingesetzt, die lodpropargylverbindungen rasch zerstören. Um den Abbau dieser Verbindungen zu reduzieren, beschreibt die EP-B 2779830 die Verwendung einer Mischung aus Stickstoff enthaltenden Polymeren und lodpropargylverbindungen. Diese Mischung ermöglicht eine Stabilisierung der lodpropargylverbindungen in (organischen) Lösungsmittel- und Wasser-basierten Systemen sowohl vor chemischem als auch Licht induziertem Abbau. Auch die EP 2594132 A1 offenbart die Stabilisierung von lodpropargylverbindungen mit Stickstoff enthaltenden Polymeren zur Herstellung biozider Mittel zum Schutz von technischen Materialien.

Obwohl die Zersetzung der lodpropargylverbindungen in der Gegenwart der Stickstoff enthaltenden Polymeren reduziert ist, hat sich dennoch gezeigt, dass die Lagerstabilität der aus der EP-B 2779830 bekannten Mischungen verbesserungswürdig ist. Nach wenigen Tagen können sich unter bestimmten Bedingungen polymerhaltige Phasen ausbilden, die einen technischen Einfluss auf die gleichmäßige Wirkung des Produktes haben können und vom Kunden nicht gewünscht werden.

Die Aufgabe der vorstehenden Erfindung bestand also darin eine Mischung bereitzustellen, bei der die hohe Stabilität der lodpropargylverbindungen bestehen bleibt und bei dem die Bildung der polymerhaltigen Phasen verhindert wird.

Es wurde jetzt überraschend gefunden, dass in den erfindungsgemäßen Mischungen, mit einem speziellen Wassergehalt, die hohe Stabilität der lodpropargylverbindungen erhalten bleibt und die polymerhaltige Phasenbildung vermieden werden kann und dadurch auch die hohe Qualität der Mischung aufrechterhalten werden kann.

Gegenstand der Erfindung ist daher eine Mischung enthaltend
1 bis 10 Gew.-% mindestens ein Stickstoff enthaltendes Polymer mit wenigstens zwei beta-Aminoaminfunktionen und
15 bis 30 Gew.% mindestens einer lodpropargylverbindung ausgewählt aus der Gruppe 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat und
55 bis 75 Gew.-% mindestens einem Alkylenglycol und
einen Wassergehalt von 1,5 bis 6,0 Gew. %, jeweils bezogen auf die Gesamtmenge der Mischung.

Die erfindungsgemäßen Mischungen weisen vorzugsweise auch nach 8 Wochen Lagerung keine Phasentrennung auf. Besonders bevorzugt weisen die Mischungen für mindestens ein Jahr keine Phasentrennung auf.

Vorzugsweise sind Stickstoff enthaltende Polymere mit wenigstens zwei beta-Aminoamingruppen Umsetzungsprodukte von Aziridinen, die eine oder mehrere unsubstituierte oder substituierte Aziridin-Gruppen enthalten, in Gegenwart von Wasser. Dabei wird der Aziridinring durch nukleophile Reaktion mit Wasser geöffnet, wobei ein beta-Aminoalkohol entsteht. Die Aminogruppe selbst kann als starkes Nukleophil dann beispielsweise die nukleophile Ringöffnung eines weiteren Aziridinringes bewirken, wodurch ein Dimer enthaltend eine beta-Aminoamin-Funktion entsteht, die wiederum weiter unter Bildung höherer Polymere reagieren kann. Vorzugsweise werden Stickstoff enthaltende Polymere aus Aziridinen, die eine oder mehrere unsubstituierte oder substituierte Aziridin-Gruppen enthalten, durch Umsetzung mit Wasser hergestellt.

Die eingesetzte Wassermenge kann bei dieser Umsetzung in einem breiten Bereich variiert werden. Im Allgemeinen setzt man mindestens 10 Gew. % Wasser, bezogen auf die eingesetzten Aziridine ein. Bevorzugt beträgt die Wassermenge 20 bis 1000 Gew. %, besonders bevorzugt 30 bis 300 Gew. % bezogen auf die eingesetzten Aziridine.

Die Reaktionstemperatur beträgt vorzugsweise 30 bis 100 °C, besonders bevorzugt 40 bis 90 °C und noch weiter bevorzugt 50 bis 80 °C.

Vorzugsweise wird die Umsetzung solange geführt, bis 95 % oder mehr, vorzugsweise 98 % oder mehr, besonders bevorzugt 99 % oder mehr des eingesetzten Aziridins bezogen auf den Anteil an Aziridinringen zur Umsetzung gebracht wurde. Ganz besonders bevorzugt wird die Reaktion so lange geführt bis keine Aziridinringe mehr nachweisbar sind.

Demzufolge weisen die Stickstoff enthaltenden Polymere einen Anteil von 5 % oder weniger, vorzugsweise 2 % oder weniger, besonders bevorzugt 1 % oder weniger, ganz besonders bevorzugt keine nachweisbaren Gehalte an Aziridinringen bezogen auf die eingesetzten Aziridine auf.

In einer anderen Ausführungsform weisen die Stickstoff enthaltenden Polymere einen Anteil von 5 % oder weniger, vorzugsweise 2 % oder weniger, besonders bevorzugt 1 % oder weniger, ganz besonders bevorzugt keine nachweisbaren Gehalte an Aziridin-Stickstoff bezogen auf den Gesamtstickstoffgehalt auf.

Der Anteil an unreagierten Aziridinringen kann beispielsweise mittels ¹³C-NMR Spektren im Vergleich zum eingesetzten Aziridin bestimmt werden.

Im Allgemeinen beträgt die Reaktionsdauer 2 bis 48 h, ganz bevorzugt 3 bis 24 h.

Die Stickstoff enthaltenden Polymere besitzen vorzugsweise ein gewichtsmittleres Molekulargewicht von mehr als 1000 g/mol, besonders bevorzugt 2000 bis 100000 g/mol und ganz besonders bevorzugt 2000 und 60000 g/mol bestimmt durch Gel-Permeations-Chromatographie gegen Polystyrol-Standard (sofern nicht anders angegeben: Polystyrol /PSS Polymerkit).

Die Stickstoff enthaltenden Polymere weisen vorzugsweise einen Stickstoffgehalt von 1 bis 20 Gew.-%, besonders bevorzugt 2 bis 15 Gew.-% N, und ganz besonders bevorzugt 5 bis 12 % Gew.-% N ermittelt durch Elementaranalyse auf.

Vorzugsweise werden Stickstoff enthaltende Polymere in einer Menge von 3 Gew. % bis 7 Gew. %, bezogen auf die Gesamtmenge der Mischung eingesetzt.

Bevorzugt sind Aziridinverbindungen der Formel (I) 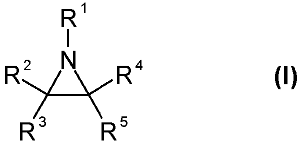 wobei
R¹ Wasserstoff, Alkyl oder Cycloalkyl, die jeweils unsubstituiert oder substituiert und/oder einfach- oder mehrfach ethylenisch ungesättigt sind, jeweils substituiertes oder unsubstituiertes Fullerenyl, Aryl, Alkoxy, Alkoxycarbonyl, Arylcarbonyl oder Alkanoyl bedeutet,
R², R³, R⁴ und R⁵ unabhängig voneinander die gleiche Bedeutung wie R¹ haben und zusätzlich unabhängig Halogen, Hydroxyl, Carboxyl, Alkylsulfonyl, Arylsulfonyl, Nitril, Isonitril bedeuten und
R² und R⁴ oder R³ und R⁵ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

Als monofunktionelle Aziridine der Formel (I) kommen bspw. solche in Frage, worin R² und R⁴ oder R³ und R⁵ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

Insbesondere sind dies solche der Formel (II) 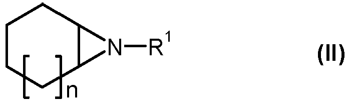 wobei der carbocyclische Ring unsubstituiert ist oder mit einem oder mehreren Substituenten ausgewählt aus der Reihe Halogen, Hydroxyl, Oxo, Carboxyl, Alkylsulfonyl, Arylsulfonyl, Nitril, Isonitril, Alkyl oder Cycloalkyl, die jeweils unsubstituiert oder substituiert und/oder einfach- oder mehrfach ethylenisch ungesättigt sind, substituiertes oder unsubstituiertes Fullerenyl, Aryl, Alkoxy, Alkoxycarbonyl oder Alkanoyl substituiert ist und n für eine Zahl von 0 bis 6, bevorzugt von 0 bis 1 steht.

Ebenfalls sind solche monofunktionelle Aziridinverbindungen der Formel (I) bevorzugt, worin R¹ für einen Rest der Formel 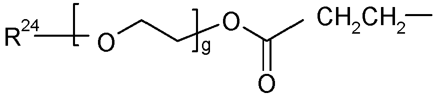 oder 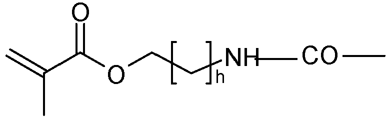 steht,
worin
R²⁴ für -H oder Alkyl, bevorzugt für -H, -CH₃, -C₂H₅, besonders bevorzugt für -CH₃, -C₂H₅ steht,
g eine Zahl von 1 bis 4, bevorzugt 1 bis 3, besonders bevorzugt 1 bis 2 ist,
h eine Zahl von 1 bis 11, bevorzugt 1 bis 5 und besonders bevorzugt 1 bis 3 ist
und die übrigen Reste, die obige Bedeutung haben.

Insbesondere sind solche Verbindungen der Formel (I) bevorzugt, die der Verbindung der Formel (III) oder (IV) entsprechen. 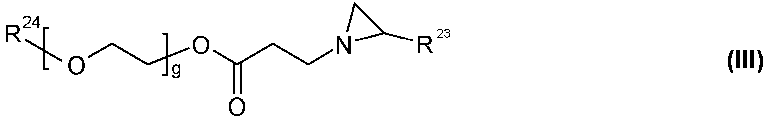 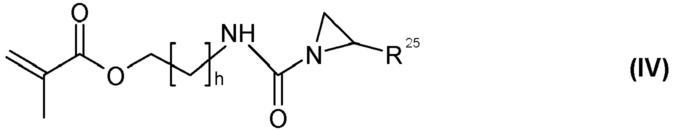 wobei
R²³ für -H oder Alkyl, bevorzugt für -H oder -CH₃, besonders bevorzugt für -CH₃ steht,
R²⁵ für -H oder Alkyl, bevorzugt für -H oder -CH₃, besonders bevorzugt für -CH₃ steht und die übrigen Reste die obige Bedeutung haben.

Besonders bevorzugt sind Aziridine, die zwei oder mehrere Aziridinfunktionen haben. Beispielsweise sind Verbindungen der Formel (V) zu nennen 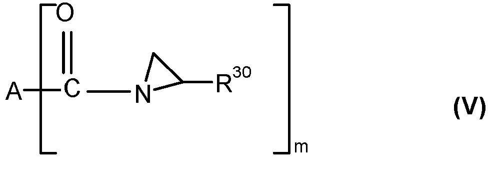 worin
A für einen m-valenten aliphatischen, cycloaliphatischen oder aromatischen Rest steht, der ggf. substituiert ist,
m für eine Zahl von 2 bis 5, insbesondere 2 bis 3 steht, und
R³⁰ für jede m-Einheit jeweils unabhängig für Wasserstoff oder C₁-C₄-Alkyl, insbesondere CH₃ oder CH₂CH₃ steht.

Bei m = 2 steht A bevorzugt für C₂-C₁₀-Alkylen,
insbesondere für

-(CH₂)₆)-, -C(CH₃)₂ CH₂ C(CH₃)₂ CH₂-

oder

- C(CH₃)₂ CH₂ CH(CH₃) CH₂ -

oder für ein Phenylen, insbesondere für den bivalenten Rest der Formel

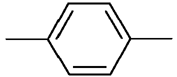

Bei m = 3 steht A bevorzugt für den trivalenten Rest der Formel

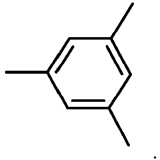

Bevorzugt sind solche Verbindungen der Formel (V), die den Formeln (Va) - (Vd) entsprechen.

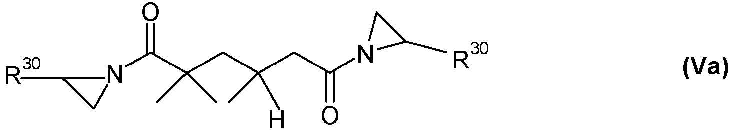

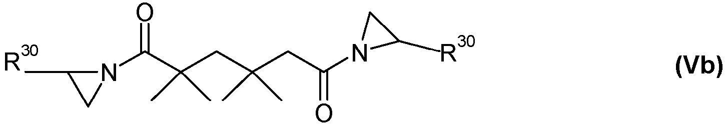

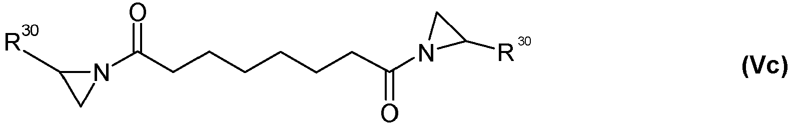

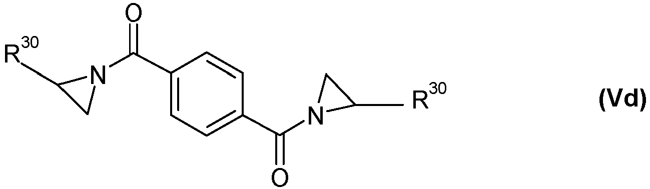

Ebenfalls bevorzugt sind als polyfunktionelle Aziridinverbindungen, Michael-Additionsprodukte von gegebenenfalls substituiertem Ethylenimin an Ester von mehrwertigen Alkoholen mit α,β-ungesättigten Carbonsäuren und den Additionsprodukten von gegebenenfalls substituiertem Ethylenimin an Polyisocyanate.

Geeignete Alkoholkomponenten sind beispielsweise Trimethylolpropan, Neopentylglykol, Glycerin, Pentaerythrit, 4,4'-Isopropylidendiphenol und 4,4'-Methylendiphenol. Als α,β-ungesättigte Carbonsäuren kommen bspw. Acryl- und Methacrylsäure, Crotonsäure und Zimtsäure in Frage.

Die korrespondierenden mehrwertigen Alkohole der α,β-ungesättigten Carbonsäureester können ggf. Alkohole sein, die an ihren OH-Funktionen teilweise vollständig mit Alkylenoxiden einfach oder mehrfach verlängert sind. Hierbei kann es sich bspw. um die mit Alkylenoxiden einfach oder mehrfach verlängerten oben genannten Alkohole handeln. Diesbezüglich wird auch auf die US 4,605,698 verwiesen, dessen Offenbarung durch Bezugnahme in die vorliegende Erfindung eingeschlossen ist. Erfindungsgemäß besonders geeignete Alkylenoxide sind Ethylenoxid und Propylenoxid.

Beispiele für zur Reaktion mit gegebenenfalls substituiertem Ethylenimin geeigneten Polyisocyanaten sind die auf S. 4, Zeile 33 - 35 von WO2004/050617 A genannten.

Beispiele für erfindungsgemäß geeignete Aziridine sind die auf S. 3, Zeile 29 - 34 von WO2004/050617 A genannten.

Bevorzugt sind ebenfalls solche Aziridine wie sie beispielsweise in US 3,225,013 (Fram), US 4,490,505 (Pendergrass) und US 5,534,391 (Wang) beschrieben sind.

Ebenfalls bevorzugt sind solche Aziridine der Formel (I), die wenigsten drei Aziridingruppen besitzen, wie beispielsweise Trimethylolpropan-tris[3-(1-aziridinyl)propionat], Trimethylolpropan-tris[3-(2-methyl-1-aziridinyl)propionat], Trimethylolpropan-tris[2-aziridinylbutyrat], Tris(1-aziridinyl)phosphinoxid, Tris(2-methyl-1-aziridinyl)phosphinoxid, Pentaerythritol-tris-[3-(1-aziridinyl)propionat] und Pentaerythritol-tetrakis-[3-(1-aziridinyl)propionat].

Hiervon sind besonders Trimethylolpropan-tris[3-(1-aziridinyl)propionat], Trimethylolpropan-tris[3-(2-methyl-1-aziridinyl)propionat], Trimethylolpropan-tris[2-aziridinylbutyrat], Pentaerythritol-tris-[3-(1-aziridinyl)propionat] und Pentaerythritol-tetrakis-[3-(1-aziridinyl)propionat] bevorzugt.

Besonders sind Trimethylolpropan-tris[3-(1-aziridinyl)propionat], Trimethylolpropan-tris[3-(2-methyl-1-aziridinyl)propionat] und Pentaerythritol-tetrakis-[3-(1-aziridinyl)propionat] bevorzugt.

Ebenfalls bevorzugt sind polyfunktionelle Aziridine der Formel (VI) 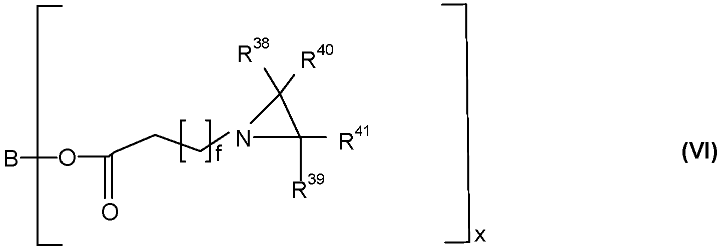 worin
B der Rest eines aliphatischen Polyols ist, das wenigstens x OH-Funktionen aufweist, wobei x OH-Funktionen durch den Rest der obigen Klammer substituiert sind,
f für eine Zahl von 0 bis 6, insbesondere von 1 bis 3 steht,
x eine Zahl größer oder gleich 2 ist, insbesondere für 2 bis 100.000 steht und
R³⁸ und R³⁹ oder R⁴⁰ und R⁴¹ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

Besonders bevorzugt ist B der Rest eines Poyvinylalkohols. Besonders bevorzugt sind solche Aziridine der Formel (VI), worin x für 3 oder 4 steht und B ein 3- oder 4-fach OHfunktionelles Polyol ist.

Besonders bevorzugt sind Aziridine der Formel (VI), die der Formel (Vla) - (VIc) entsprechen 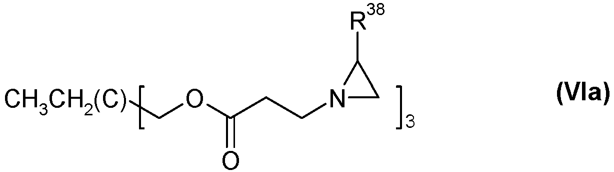 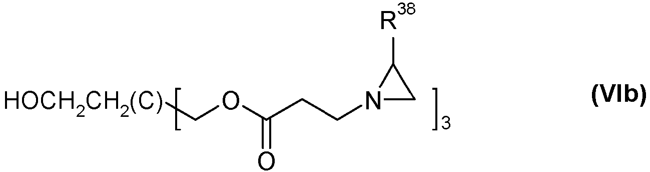 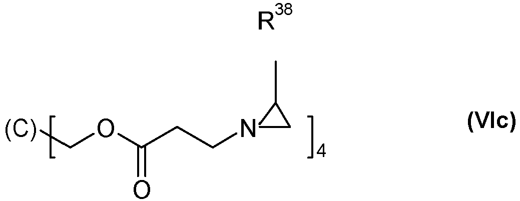 worin
R³⁸ für Wasserstoff oder CH₃ steht.

Besonders bevorzugt ist die Aziridinverbindung der Formel (Vla), mit R³⁸ = Methyl, beispielsweise als Crosslinker CX-100 von DSM bekannt, sowie auch das Aziridin der Formel (Vla) mit R³⁸ = Wasserstoff, z.B. bekannt als "Corial Härter AN" der BASF.

Bevorzugt wird als lodpropargylverbindung, 3-Iod-2-propinyl-butyl-carbamat (IPBC) eingesetzt.

Als Alkylenglycole werden vorzugsweise Mono-, Di,- Tri-, Oligo- oder Polyalkylenglycole oder deren veretherte Derivate eingesetzt. Besonders bevorzugt werden Ethylenglycol, Diethylenglycol, Diethylenglycolbutylether, Triethylenglycol, Tetraethylenglycol, Polyethylenglycol, Propylenglycol, Dipropylenglycol, Dipropylenglykol-Monomethylether (z.B. Dowanol^{®} DPM der Fa. Dow.) oder Polypropylenglcol sowie beliebige Mischungen dieser Verbindungen als Alkylenglycole eingesetzt.

Ganz besonders bevorzugt wird als Alkylenglycol Diethylenglycolbutylether eingesetzt.

Die Alkylenglycole werden vorzugsweise im Herstellungsverfahren der Stickstoff enthaltenden Polymeren eingesetzt und liegen auch nach diesem Herstellungsverfahren in der erfindungsgemäßen Mischung vor. Die Alkylenglycole können aber auch erst nachträglich in die Mischung gegeben werden.

Der Mischung können auch anorganische oder organische Säuren hinzugegeben werden. Bevorzugt enthalten die erfindungsgemäßen Mischungen Säuren.

Als Säuren können anorganische oder organische Säuren oder Mischungen dieser Säuren eingesetzt werden. Bevorzugte anorganische Säuren sind vorzugsweise Schwefelsäure, Salpetersäure und Phosphorsäure.

Als organischen Säure können in vorzugsweise Ameisensäure, Essigsäure, Citronensäure, Propionsäure oder Benzoesäure. Besonders bevorzugt werden organische Säuren eingesetzt. Ganz besonders bevorzugt wird Ameisensäure eingesetzt.

Der Gehalt an Säuren kann in einem breiten Bereich variiert werden. Im Allgemeinen beträgt er 0,01 bis 3 Gew.-%, bevorzugt 0,03 bis 1,5 Gew.-% und ganz besonders bevorzugt 0,05 bis 1 Gew.-% bezogen auf die Gesamtmenge der Mischung.

Die Wassermenge in der Mischung beträgt vorzugsweise 2 bis 6 Gew. % bezogen auf die Gesamtmenge der Mischung.

Vorzugsweise weist die Mischung folgende Zusammensetzung auf:
15 bis 30 Gew. % lodpropargylverbindungen.
55 bis 75 Gew.% Alkylenglycol
1 bis 10 Gew. % Stickstoff enthaltenes Polymer und
1,5 bis 6 Gew.% Wasser
gegebenenfalls und vorzugsweise 0,01 bis 3,0 Gew. % Säure
bezogen auf die Gesamtmenge der Mischung.

Besonders bevorzugt weist die Mischung folgende Zusammensetzung auf:
15 bis 30 Gew. % lodpropargylverbindungen.
55 bis 75 Gew.% Alkylenglycol
1 bis 10 Gew. % Stickstoff enthaltenes Polymer und
2 bis 6 Gew.% Wasser
gegebenenfalls und vorzugsweise 0,01 bis 3,0 Gew. % Säure
bezogen auf die Gesamtmenge der Mischung.

Von der Erfindung ist ebenfalls ein Verfahren zur Herstellung der erfindungsgemäßen Mischungen umfasst, bei dem mindestens ein Stickstoff enthaltendes Polymer mit wenigstens zwei beta-Aminoaminfunktionen in einer Menge von 1 bis 10 Gew.-%, mit mindestens 15 bis 30 Gew.-% einer lodpropargylverbindung ausgewählt aus der Gruppe 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat und 55 bis 75 Gew.-% von mindestens einem Alkylenglycol und gegebenenfalls in Gegenwart mindestens einer Säure vermischt werden und der Wassergehalt auf eine Menge von 1,5 bis 6 Gew. % eingestellt wird, wobei die angegebenen Mengen jeweils bezogen auf die Gesamtmenge der Mischung sind.

In einer Ausführungsform der Erfindung wird zunächst das Stickstoff enthaltende Polymere mit wenigstens zwei beta-Aminoaminfunktionen vorgelegt und dann der Alkylenglycol hinzugegeben. Danach wird dann vorzugsweise die lodpropargylverbindung hinzugegeben. Dann wird vorzugsweise die Säure hinzugegeben. Die Zugabe von Wasser erfolgt vorzugsweise nach Zugabe der Alkylenglycole.

In einer weiteren Ausführungsform der Erfindung wird vorzugsweise das Stickstoff enthaltende Polymer mit wenigstens zwei beta-Aminoaminfunktionen zunächst in-situ aus mindestens einem Aziridin hergestellt und dann erfolgt die Vermischung mit dem Alkylenglycol. Die Herstellung des Stickstoff enthaltende Polymers mit wenigstens zwei beta-Aminoaminfunktionen aus Aziridinen erfolgt in Gegenwart von Wasser. Die Reaktion wird bei erhöhter Temperatur, vorzugsweise bei 30°C bis 100 °C, durchgeführt. Es besteht die Möglichkeit, die Herstellung in der Art durchzuführen, dass eine entsprechende geringe Menge Wasser in der Reaktion eingesetzt wird oder nach der Reaktion das Wasser reduziert wird. Vorzugsweise wird eine größere Menge Wasser während der Reaktion eingesetzt und diese nach der Reaktion wieder reduziert. Vorzugsweise erfolgt diese Reduktion mittels Destillation. Danach erfolgt vorzugsweise die Zugabe des Alkylenglycols. Danach erfolgt vorzugsweise die Zugabe der lodpropargylverbindung. Die Zugabe der Säuren erfolgt vorzugsweise nach der Zugabe der lodpropargylverbindung.

In einer weiteren Ausführungsform ist von der Erfindung auch ein Verfahren zur Herstellung der erfindungsgemäßen Mischungen umfasst, bei dem
in einem Schritt a)
mindestens ein Aziridin in Gegenwart von Wasser und mindestens einem Alkylenglycol umgesetzt wird und
in einem Schritt b)
das Wasser bis auf eine Konzentration von 1,5 Gew. % bis 6 Gew. % bezogen auf die Gesamtmenge der herzustellenden Mischung in Schritt b) entfernt wird und

in einem Schritt c) mindestens eine lodpropargylverbindung und mindestens eine Säure, gegebenenfalls in der Gegenwart von mindestens einem weiteren Alkylenglycol, der gleich oder verschieden von dem Alkylenglycol sein kann, der in Schritt a) eingesetzt wird, zugegeben wird

In Schritt a) werden zunächst die Aziridine mit dem Wasser vorgelegt und dann die Alkylenglycole zugegeben. Dann wird die Reaktionstemperatur eingestellt und vorzugsweise gerührt.

In einer weiteren bevorzugten erfindungsgemäßen Ausführungsform wird ein Teil der Alkylenglycole in Schritt a) erst nach Ablauf der Reaktion zugegeben. Bevorzugt wird ein Teil der Alkylenglycole vor der Erhöhung der Temperatur auf die Reaktionstemperatur zugegeben und ein weiterer Teil nach Abschluss der Reaktion. Besonders bevorzugt werden 10 bis 20 Gew. % bezogen auf die Gesamtmenge an Alkylenglycolen vor der Erhöhung der Temperatur auf Reaktionstemperatur in Schritt a) eingesetzt und 80 bis 90 Gew. % nach Abschluss der Reaktion. Bevorzugt erfolgt dann in Schritt b) die Entfernung des Wasser auf einen Gehalt von 1,5 Gew.% bis 6 Gew. %, vorzugsweise durch Destillation. Bevorzugt wird die gesamte Menge an eingesetztem Alkylenglycol vor der Entfernung des Wassers in Schritt b) eingesetzt bzw. zu der Lösung in Schritt a) hinzugegeben.

Nach der Durchführung von Schritt a) wird in einem Schritt b.) das Wasser durch, vorzugsweise, Destillation, bis zu einer Konzentration von 1.5 Gew. % bis 6 Gew. % entfernt. Besonders bevorzugt wird das Wasser bis zu einer Konzentration von 2 Gew. % bis 6 Gew. % entfernt.

Der Wassergehalt könnte auch durch Zugabe eines Trocknungsmittel, wie vorzugsweise Silicagel oder Phosphorpentoxid reduziert werden. Bevorzugt wird das Wasser durch Destillation bei Unterdruck reduziert. Vorzugsweise beträgt der Druck zwischen 1 mbar und 450 mbar, besonders bevorzugt zwischen 50 mbar und 300 mbar während der Reduktion der Wassermenge. Das abzudestillierende Wasser wird dann durch Temperaturerhöhung bis zum Siedepunkt erwärmt.

Vorzugsweise wird dann in einem Schritt c) die lodpropargylverbindung und die Säure hinzugegeben.

Die Menge an lodpropargylverbindungen, die in Schritt c) eingesetzt werden können, beträgt vorzugsweise 0,01 bis 70 Gew.-%, besonders bevorzugt 0,1 bis 50 Gew.-% und ganz besonders bevorzugt 15 Gew. % bis 30 Gew.% bezogen auf die Gesamtmenge der Mischung in Schritt c).

Der Gehalt an Säuren kann in einem breiten Bereich variiert werden. Im Allgemeinen beträgt er 0,01 bis 3 Gew.-%, bevorzugt 0,03 bis 1,5 Gew.-% und ganz besonders bevorzugt 0,05 bis 1 Gew.-% bezogen auf die Gesamtmenge der Mischung in Schritt c). Weiterhin kann der Mischung aus Schritt b) in Schritt c) Alkylenglycole hinzugegeben werden. Diese können von den Alkylenglycolen, die in Schritt a) eingesetzt wurden gleich oder verschieden sein. Bevorzugt werden die gleichen Alkylenglycole in Schritt c) eingesetzt. Bevorzugt werden in Schritt Schritt a) Alkylenglycole eingesetzt. Falls Alkylenglycole in Schritt c) eingesetzt werden, dann beträgt die Menge vorzugsweise 70 bis 90 Gew.% bezogen auf die in Schritt a) eingesetzten Alkylenglycole.

Den erfindungsgemäßen Mischungen weitere Wirkstoffe und Hilfsstoffe zugegeben werden. Vorzugsweise werden die weiteren Wirkstoffe und/oder Hilfsstoffe in Schritt c) zugegeben.

Es können beispielsweise organische Lösungsmittel, wie Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, wie vorzugsweise Erdölfraktionen (Testbenzin, Shellsol D60 der Fa. Shell Chemical), einwertige Alkohole, wie vorzugsweise Ethanol, Isopropanol und Butanol, mehrwertige Alkohole, wie vorzugsweise Glycerin, Pentaerythritol, Polyvinylalkohol (z.B. Poval^{®} der Fa. Kuraray), Ether und Ester von Alkoholen wie (Texanol^{®} der Fa. Eastman), Ketone, wie vorzugsweise Aceton, Methylethylketon, Methylisobutylketon oder Cyclohexanon, stark polar aprotische Lösungsmittel, wie beispielsweise Dimethylformamid und Dimethylsulfoxid, Ester von ein- sowie mehrwertigen Carbonsäuren, z.B. Adipinsäurediisobutylester, Maleinsäurediisobutylester (z.B. Rhodiasolv DIB^{®}) zugegeben werden.

Weiterhin können den erfindungsgemäßen Mischungen weitere Inhaltsstoffe, wie Haftmittel, wie Carboxymethylcellulose, natürliche und synthetische pulverige, körnige oder latexförmige Polymere, wie Gummiarabicum, Polyvinylalkohol, Polyvinylacetat, sowie natürliche Phospholipide, wie Kephaline und Lecithine, und synthetische Phospholipide sowie mineralische und vegetabile Öle zugesetzt werden.

Weiterhin können den erfindungsgemäßen Mischungen als weitere Inhaltsstoffe Farbstoffe wie anorganische Pigmente, z.B. Eisenoxid, Titanoxid, Ferrocyanblau und organische Farbstoffe, wie Alizarin-, Azo- und Metallphthalocyaninfarbstoffe zugegeben werden.

Weiterhin können den erfindungsgemäßen Mischungen noch Stabilisatoren, wie beispielsweise Chelatisierungsreagentien oder organische Epoxide zugegeben werden.

Die Wirksamkeit und das Wirkungsspektrum der erfindungsgemäßen Mischungen kann erhöht werden, wenn gegebenenfalls weitere Wirkstoffe ausgewählt aus der Gruppe weiterer antimikrobiell wirksame Verbindungen, Fungizide, Bakterizide, Herbizide, Insektizide oder andere Wirkstoffe zugegeben werden.

Die erfindungsgemäßen Mischungen eignen sich insbesondere zur bioziden Ausrüstung von technischen Materialien, wie insbesondere Anstrichmittel, wie beispielsweise Farben, Lacken, Grundierungen, Imprägnierungen, Lasuren. Der Einsatz erfolgt üblicherweise in Bindemittelformulierungen, wie sie z.B. in der EP-B 2779830 beschrieben sind.

Die erfindungsgemäßen Mischungen haben weiterhin eine hohe Materialschutzwirkung und weisen auch nach mehreren Wochen Lagerung keine Polymerphasenbildungen mehr auf. Die Erfindung betrifft weiterhin die Verwendung der erfindungsgemäßen Mischungen zum Schutz von technischen Materialien gegen Zerstörung oder Befall durch Mikroorganismen.

Die erfindungsgemäßen Mischungen eignen sich zur bioziden Ausrüstung von technischen Materialien. Unter technischen Materialien sind im vorliegenden Zusammenhang nicht-lebende Materialien zu verstehen, die für die Verwendung in der Technik zubereitet worden sind. Beispielsweise handelt es sich bei den technischen Materialien um Klebstoffe, Leime, Papier und Karton, Textilien, Leder, Holz, Holzwerkstoffe, Anstrichmittel und Kunststoffartikel, Kühlschmierstoffe und andere Materialien, die von Mikroorganismen befallen oder zersetzt werden können.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffe gegen Pilze, insbesondere Schimmelpilze, holzverfärbende und holzzerstörende Pilze (Basidiomyceten) sowie gegen Schleimorganismen und Bakterien.

Es seien beispielsweise Mikroorganismen der folgenden Gattung genannt:
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viride,
Escherichia, wie Escherichia coli,
Pseudomonas, wie Pseudomonas aeruginosa,
Staphylococcus, wie Staphylococcus aureus.

Die Erfindung wird nachstehend anhand von Beispielen erläutert ohne sie jedoch darauf zu beschränken.

### Beispiele

### Beispiel 1

### Herstellung eines erfindungsgemäßen bioziden Mittels

Schritt a): 30 g Trimethylolpropan-tris[3-(2-methyl-1-aziridinyl)propionat] (Crosslinker CX-100 von DSM) wurden in 75 ml Wasser (250 Gew.% bezogen auf das Aziridin / Wassergehalt bezogen auf die Mischung: 19,2 Gew.%) vorgelegt und unter Rührung mit dem Magnetrührer mit 45 g Butyldiglycol versetzt. Anschließend wurde 6 h bei 80°C gerührt. Man erhielt eine klare, leicht gelbstichige Lösung. Diese Lösung wurde unter Rühren mit weiteren 239 g Butyldiglycol (Gesamtmenge 73 Gew. % bezogen auf die Mischung) versetzt. Schritt b): Anschließend wurde Wasser bei konstant 150 mbar abdestilliert und zwischendurch 3 Proben gezogen (siehe Tabelle 1)

**Tabelle 1: Probenentnahme**

| Probe | Versuchsbedingungen Schritt c) |
|---|---|
| Probe 1 | 50,42g Probe 1 wurden mit 11,6 g IPBC und 0,2% Ameisensäure (0,12 g) versetzt. |
| Probe 2 | 47,93g Probe 2 wurden mit 11 g IPBC und 0,2% Ameisensäure (0,11 g) versetzt. |
| Probe 3 | 49,54 g Probe 3 wurden mit 11,4 g IPBC und 0,2% Ameisensäure (0,12 g) versetzt. |
| Probe 4 | 171,8g Endprobe wurden mit 39,64 g IPBC und 0,2% Ameisensäure (0,42 g) versetzt. |

**Tabelle 2: Ergebnisse**

| Probe | 3-Iod-2-propinyl-butyl-carbamat Gehalt | Wassergehalt | Phase |
|---|---|---|---|
| 1 | 18,8% | 9,30% | Trüb / schnelle Phasenbildung (1-2 Tage) |
| 2 | 18,8% | 7,10% | Trüb / schnelle Phasenbildung (1-2 Tage) |
| 3 | 18,9% | 5,00% | 22 Wochen ohne Phase |
| 4 | 18,6% | 1,87% | mindestens 33 Wochen ohne Phase |

Der Wassergehalt wurde mittels Karl-Fischer-Titration bestimmt und ist in Gewichtsprozent angegeben. Der IPBC-Gehalt wurde mittels HPLC bestimmt und ist in Gewichtsprozent angegeben.

Analog Beispiel 1 wurden die erfindungsgemäßen Mischungen mit unterschiedlichem Wassergehalt hergestellt und für 3 Monate bei 40°C gelagert. Der Gehalt an 3-Iod-2-propinyl-butyl-carbamat (IPBC) wurde mittels HPLC zu Beginn der Lagerung und nach 3 Monaten gemessen, um den Wirkstoffabbau zu bestimmen

**Tabelle 3:**

| Probe | Wassergehalt (Gew.%) | IPBC Abbau nach 3 Monaten 40°C |
|---|---|---|
| 1 | 5,0% | 21% |
| 2 | 1,9% | 27% |
| 3 | 1,1% | 40% |

Unter einem Gehalt von 1,5 Gew. % Wasser in der phasenfreien Mischung gemäß Anspruch 1 ist die Stabilität von IPBC bei längerer Lagerung nicht mehr ausreichend. Ein Gehalt von über 6 Gew. % Wasser in der Mischung gemäß Anspruch 1 führt zu einer Phasenbildung, die zur Nutzung des Produktes weitere Behandlungen, wie Aufrühren, notwendig macht und daher den Einsatz eines weiteren Verfahrensschrittes bedingt und damit technisch und ökonomisch nachteilig ist.

### Bestimmung des Molekulargewichtes:

25 g einer gemäß Schritt a) oben hergestellten Probe wurde bei 50 °C im Ölpumpenvakuum (ca. 0,35 mbar) vom Wasser befreit. Man erhielt 12,85 g eines hochviskosen Öls. 1 g dieses Öls wurde 3 mal mit je 5 g THF verrührt und der Rückstand über Nacht im Exsikkator getrocknet und mittels GPC (Standard: Polystyrol /PSS Polymerkit)) untersucht. Man identifizierte ein Polymer mit einem mittleren Molekulargewicht von 12238 g/mol. In der THF Waschflüssigkeit konnte mit GC-MS nur Butyldiglycol als einzige Komponente nachgewiesen werden.

Aziridinfunktionalitäten konnten nicht nachgewiesen werden.

### Beispiel 2

### Herstellung eines erfindungsgemäßen bioziden Mittels

Schritt a): 10 g Trimethylolpropan-tris[3-(2-methyl-1-aziridinyl)propionat] (Crosslinker CX-100 von DSM) wurden in 25 ml Wasser (Wassergehalt bezogen auf die Gesamtmischung 14,5 Gew.%) vorgelegt und unter Rührung mit dem Magnetrührer mit 15 g Butyldiglycol versetzt. Anschließend wurde 6 h bei 80°C gerührt. Man erhielt eine klare, leicht gelbstichige Lösung. Diese Lösung wurde unter Rühren mit weiteren 79,9 g Butyldiglycol (Gesamtmenge 46,1 Gew.% bezogen auf die Gesamtmischung) versetzt. Schritt b): Anschließend wurde Wasser bei konstant 150 mbar abdestilliert bis der Wassergehalt unter 4% lag.

Schritt c): Die zurückbleibenden 104,6g wurden mit 34,9 g IPBC und 0,29 g Ameisensäure versetzt.
Wassergehalt bestimmt mittels Karl-Fischer Titration: 3,35 %
IPBC: 25,3% IPBC
Mittleres Molekulargewicht des Polymeren aus Schritt a) bestimmt gemäß Beispiel 1: 15966 g/mol g/mol.

Das Produkt hat seit 16 Wochen keine Phase.

### Vergleichsbeispiel 1 (nicht erfindungsgemäß)

### Herstellung eines bioziden Mittels ohne Wasserreduktion

10 g Trimethylolpropan-tris[3-(2-methyl-1-aziridinyl)propionat] (Crosslinker CX-100 von DSM) wurden in 25 ml Wasser (14,5 Gew. % bezogen auf die Gesamtmenge der Mischung) vorgelegt und unter Rührung mit dem Magnetrührer mit 15 g Butyldiglycol versetzt. Anschließend wurde 6 h bei 80°C gerührt. Man erhielt eine nach dem Abkühlen klare, leicht gelbstichige Lösung. Diese Lösung wurde unter Rühren mit weiteren 79,7 g Butyldiglycol und 42,8 g IPBC (Iodpropargylbutylcarbamat) versetzt. Anschließend wurden 0,33 g Ameisensäure zugegeben. Das fertige technische Konzentrat war hellgelb aber trüb und hatte einen IPBC-Gehalt von 25,8%. Der Wassergehalt beträgt 13,1 Gew. % bezogen auf die Gesamtmenge der Mischung. Der Wassergehalt wurde mittels Karl-Fischer-Titration bestimmt und ist in Gewichtsprozent angegeben.

Nach 2 Tagen hatte sich eine Phase gebildet. Diese wurde abdekantiert. Nach 1 Woche Lagerung hat sich erneut eine Phase gebildet.

## Patentansprüche

1. Mischungen enthaltend
1 bis 10 Gew.-% mindestens ein Stickstoff enthaltendes Polymer mit wenigstens zwei beta-Aminoaminfunktionen und
15 bis 30 Gew.% mindestens eine lodpropargylverbindung ausgewählt aus der Gruppe 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-lod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethyl-carbamat, 3-Iod-2-propinyl-n-hexylcarbamat und 3-Iod-2-propinyl-cyclohexylcarbamat und
55 bis 75 Gew.-% mindestens ein Alkylenglycol und
einen Wassergehalt von 1,5 bis 6,0 Gew. %, jeweils bezogen auf die Gesamtmenge der Mischung.

2. Mischungen gemäß Anspruch 1, **dadurch gekennzeichnet, dass** die Stickstoff enthaltenden Polymere ein gewichtsmittleres Molekulargewicht von 2000 bis 100000 g/mol besitzen, bestimmt durch Gel-Permeations-Chromatographie gegen Polystyrol-Standard, aufweisen.

3. Mischungen gemäß Anspruch 1 oder 2, **dadurch gekennzeichnet, dass** die Stickstoff enthaltenden Polymere einen Stickstoffgehalt von 1 bis 20 Gew.-%, bestimmt durch Elementaranalyse, aufweisen.

4. Mischungen gemäß einem der Ansprüche 1 bis 3, **dadurch gekennzeichnet, dass** die Stickstoff enthaltenden Polymere aus Aziridinen, die eine oder mehrere unsubstituierte oder substituierte Aziridin-Gruppen enthalten, durch Umsetzung mit Wasser hergestellt werden.

5. Mischungen gemäß Anspruch 4, **dadurch gekennzeichnet, dass** als Aziridin mindestens ein Aziridin der Formel (I) 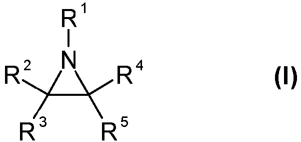 wobei
R¹ Wasserstoff, Alkyl oder Cycloalkyl, die jeweils unsubstituiert oder substituiert und/oder einfach- oder mehrfach ethylenisch ungesättigt sind, jeweils substituiertes oder unsubstituiertes Fullerenyl, Aryl, Alkoxy, Alkoxycarbonyl, Arylcarbonyl oder Alkanoyl bedeutet,
R², R³, R⁴ und R⁵ unabhängig voneinander die gleiche Bedeutung wie R¹ haben und zusätzlich unabhängig Halogen, Hydroxyl, Carboxyl, Alkylsulfonyl, Arylsulfonyl, Nitril, Isonitril bedeuten und
R² und R⁴ oder R³ und R⁵ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist, eingesetzt wird.

6. Mischungen gemäß Anspruch 4 oder 5, **dadurch gekennzeichnet, dass** als Aziridin Trimethylolpropan-tris[3-(1-aziridinyl)propionat], Trimethylolpropan-tris[3-(2-methyl-1-aziridinyl)propionat], Trimethylolpropan-tris[2-aziridinylbutyrat], Pentaerythritol-tris-[3-(1-aziridinyl)propionat] oder Pentaerythritol-tetrakis-[3-(1-aziridinyl)-propionat] eingesetzt wird.

7. Mischungen gemäß einem der Ansprüche 1 bis 6, **dadurch gekennzeichnet, dass** die Menge an Stickstoff enthaltenden Polymeren 3 bis 7 Gew. % beträgt.

8. Mischungen nach einem der Ansprüche 1 bis 7, **dadurch gekennzeichnet, dass** die lopropargylverbindung 3-Iod-2-propinyl-butyl-carbamat (IPBC) ist.

9. Mischungen nach einem der Ansprüche 1 bis 8, **dadurch gekennzeichnet, dass** als Alkylenglycole Ethylenglycol, Diethylenglycol, Diethylenglycolbutylether, Triethylenglycol, Tetraethylenglycol, Polyethylenglycol, Propylenglycol, Dipropylenglycol, Dipropylenglykol-Monomethylether oder Polypropylenglcol sowie beliebige Mischungen dieser Verbindungen eingesetzt werden.

10. Mischung nach einem der Ansprüche 1 bis 9, **dadurch gekennzeichnet, dass** mindestens eine Säure enthalten ist.

11. Mischungen nach einem der Ansprüche 1 bis 10, **dadurch gekennzeichnet, dass** die Säuren in einer Menge von 0,01 bis 3 Gew. % eingesetzt werden.

12. Mischungen nach einem der Ansprüche 1 bis 11, **dadurch gekennzeichnet, dass** das Wasser in einer Menge von 2 bis 6 Gew. % bezogen auf die Gesamtmenge der Mischung eingesetzt wird.

13. Verfahren zur Herstellung der Mischungen gemäß Anspruch 1, **dadurch gekennzeichnet, dass** ein mindestens ein Stickstoff enthaltendes Polymer mit wenigstens zwei beta-Aminoaminfunktionen in einer Menge von 1 bis 10 Gew.-%, mit mindestens 15 bis 30 Gew.-% einer lodpropargylverbindung ausgewählt aus der Gruppe 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat und 55 bis 75 Gew.-% von mindestens einem Alkylenglycol und gegebenenfalls in Gegenwart mindestens einer Säure vermischt werden und der Wassergehalt auf eine Menge von 1,5 bis 6 Gew. % eingestellt wird, wobei die angegebenen Mengen jeweils bezogen auf die Gesamtmenge der Mischung sind.

14. Verwendung der Mischungen nach Anspruch 1 zum Schutz von technischen Materialien gegen Zerstörung oder Befall durch Mikroorganismen.

## Claims

1. Mixtures containing
1% to 10% by weight of at least one nitrogen-containing polymer having at least two beta-aminoamine functions and 15% to 30% by weight of at least one iodopropargyl compound selected from the group of 3-iodo-2-propynyl propylcarbamate, 3-iodo-2-propynyl butylcarbamate (IPBC), 3-iodo-2-propynyl m-chlorophenylcarbamate, 3-iodo-2-propynyl phenylcarbamate, di(3-iodo-2-propynyl) hexyldicarbamate, 3-iodo-2-propynyloxyethanol ethylcarbamate, 3-iodo-2-propynyloxyethanol phenylcarbamate, 3-iodo-2-propynyl thioxothioethylcarbamate, 3-iodo-2-propynyl carbamate (IPC), 3-bromo-2,3-diiodo-2-propenyl ethylcarbamate, 3-iodo-2-propynyl n-hexylcarbamate and 3-iodo-2-propynyl cyclohexylcarbamate and
55% to 75% by weight of at least one alkylene glycol and a water content of 1.5% to 6.0% by weight, in each case based on the total amount of the mixture.

2. Mixtures according to Claim 1, **characterized in that** the nitrogen-containing polymers have a weight-average molecular weight of 2000 to 100 000 g/mol determined by gel permeation chromatography against a polystyrene standard.

3. Mixtures according to Claim 1 or 2, **characterized in that** the nitrogen-containing polymers have a nitrogen content of 1% to 20% by weight determined by elemental analysis.

4. Mixtures according to any of Claims 1 to 3, **characterized in that** the nitrogen-containing polymers are produced from aziridines containing one or more unsubstituted or substituted aziridine groups by reaction with water.

5. Mixtures according to Claim 4, **characterized in that** the aziridine employed is at least one aziridine of formula (I) 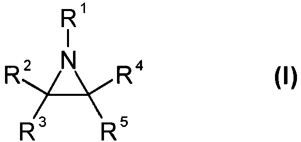 wherein
R¹ is hydrogen, alkyl or cycloalkyl, each of which are unsubstituted or substituted and/or mono- or polyethylenically unsaturated, or in each case substituted or unsubstituted fullerenyl, aryl, alkoxy, alkoxycarbonyl, arylcarbonyl or alkanoyl,
R², R³, R⁴ and R⁵ independently of one another have the same definition as R¹ and in addition are independently halogen, hydroxyl, carboxyl, alkylsulfonyl, arylsulfonyl, nitrile, isonitrile and
R² and R⁴ or R³ and R⁵ together with the carbon atoms to which they are bonded form a 5- to 10-membered carbocyclic ring that is unsubstituted or substituted and/or mono- or polyethylenically unsaturated.

6. Mixtures according to Claim 4 or 5, **characterized in that** the aziridine employed is trimethylolpropane tris[3-(1-aziridinyl)propionate], trimethylolpropane tris[3-(2-methyl-1-aziridinyl)propionate], trimethylolpropane tris[2-aziridinylbutyrate], pentaerythritol tris[3-(1-aziridinyl)propionate] or pentaerythritol tetrakis[3-(1-aziridinyl)propionate].

7. Mixtures according to any of Claims 1 to 6, **characterized in that** the amount of nitrogen-containing polymers is 3% to 7% by weight.

8. Mixtures according to any of Claims 1 to 7, **characterized in that** the iodopropargyl compound is 3-iodo-2-propynyl butylcarbamate (IPBC).

9. Mixtures according to any of Claims 1 to 8, **characterized in that** the alkylene glycols employed are ethylene glycol, diethylene glycol, diethylene glycol butyl ether, triethylene glycol, tetraethylene glycol, polyethylene glycol, propylene glycol, dipropylene glycol, dipropylene glycol monomethyl ether or polypropylene glycol and any desired mixtures of these compounds.

10. Mixture according to any of Claims 1 to 9, **characterized in that** it contains at least one acid.

11. Mixtures according to any of Claims 1 to 10, **characterized in that** the acids are employed in an amount of 0.01% to 3% by weight.

12. Mixtures according to any of Claims 1 to 11, **characterized in that** the water is employed in an amount of 2% to 6% by weight based on the total amount of the mixture.

13. Process for producing the mixtures according to Claim 1, **characterized in that** a polymer containing at least one nitrogen having at least two beta-aminoamine functions in an amount of 1% to 10% by weight is mixed with at least 15% to 30% by weight of an iodopropargyl compound selected from the group of 3-iodo-2-propynyl propylcarbamate, 3-iodo-2-propynyl butylcarbamate (IPBC), 3-iodo-2-propynyl m-chlorophenylcarbamate, 3-iodo-2-propynyl phenylcarbamate, di(3-iodo-2-propynyl) hexyldicarbamate, 3-iodo-2-propynyloxyethanol ethylcarbamate, 3-iodo-2-propynyloxyethanol phenylcarbamate, 3-iodo-2-propynyl thioxothioethylcarbamate, 3-iodo-2-propynyl carbamate (IPC), 3-bromo-2,3-diiodo-2-propenyl ethylcarbamate, 3-iodo-2-propynyl n-hexylcarbamate and 3-iodo-2-propynyl cyclohexylcarbamate and 55% to 75% by weight of at least one alkylene glycol optionally in the presence of at least one acid and the water content is adjusted to an amount of 1.5% to 6% by weight, wherein the reported amounts are in each case based on the total amount of the mixture.

14. Use of the mixtures according to Claim 1 for protection of industrial materials against destruction or attack by microorganisms.

## Revendications

1. Mélanges contenant
1 à 10% en poids d'au moins un polymère contenant de l'azote, présentant au moins deux fonctions bêta-aminoamine et
15 à 30% en poids d'au moins un composé iodopropargyle choisi dans le groupe 3-iodo-2-propynyl-propylcarbamate, 3-iodo-2-propynyl-butyl-carbamate (IPBC), 3-iodo-2-propynyl-m-chlorophényl-carbamate, 3-iodo-2-propynyl-phényl-carbamate, di-(3-iodo-2-propynyl)hexyldicarbamate, 3-iodo-2-propynyloxyéthanol-éthylcarbamate, 3-iodo-2-propynyl-oxyéthanol-phényl-carbamate, 3-iodo-2-propynyl-thioxo-thioéthylcarbamate, ester de l'acide 3-iodo-2-propynyl-carbamique (IPC), 3-bromo-2,3-diiodo-2-propényléthyl-carbamate, 3-iodo-2-propynyl-n-hexylcarbamate et 3-iodo-2-propynyl-cyclohexylcarbamate et
55 à 75% en poids d'au moins un alkylèneglycol et
une teneur en eau de 1,5 à 6,0% en poids, à chaque fois par rapport à la quantité totale du mélange.

2. Mélanges selon la revendication 1, **caractérisés en ce que** les polymères contenant de l'azote présentent une masse moléculaire moyenne en poids de 2000 à 100.000 g/mole, déterminée par chromatographie par perméation de gel par rapport à du polystyrène en tant que référence.

3. Mélanges selon la revendication 1 ou 2, **caractérisés en ce que** les polymères contenant de l'azote présentent une teneur en azote de 1 à 20% en poids, déterminée par analyse élémentaire.

4. Mélanges selon l'une des revendications 1 à 3, **caractérisés en ce que** les polymères contenant de l'azote sont préparés à partir d'aziridines, qui contiennent un ou plusieurs groupes aziridine non substituée ou substituée, par transformation avec de l'eau.

5. Mélanges selon la revendication 4, **caractérisés en ce qu'**on utilise, comme aziridine, au moins une aziridine de formule (I) 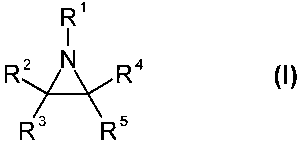 dans laquelle
R¹ représente hydrogène, alkyle ou cycloalkyle, qui sont à chaque fois non substitués ou substitués et/ou éthyléniquement monoinsaturés ou polyinsaturés, fullérényle, aryle, alcoxy, alcoxycarbonyle, arylcarbonyle ou alcanoyle, à chaque fois substitué ou non substitué,
R², R³, R⁴ et R⁵ présentent, indépendamment les uns des autres, la même signification que celle de R¹ et signifient, en outre, indépendamment, halogène, hydroxyle, carboxyle, alkylsulfonyle, arylsulfonyle, nitrile, isonitrile et
R² et R⁴ ou R³ et R⁵ forment, conjointement avec les atomes de carbone auxquels ils sont liés, un cycle carbocyclique de 5 à 10 chaînons, qui est non substitué ou substitué et/ou éthyléniquement monoinsaturé ou polyinsaturé.

6. Mélanges selon la revendication 4 ou 5, **caractérisés en ce qu'**on utilise, comme aziridine, du tris[3-(1-aziridinyl)propionate] de triméthylolpropane, du tris[3-(2-méthyl-1-aziridinyl)propionate] de triméthylolpropane, du tris[2-butyrate d'aziridinyle] de triméthylolpropane, du tris-[3-(1-aziridinyl)propionate] de pentaérythritol ou du tétrakis-[3-(1-aziridinyl)-propionate] de pentaérythritol.

7. Mélanges selon l'une des revendications 1 à 6, **caractérisés en ce que** la quantité de polymères contenant de l'azote représente 3 à 7% en poids.

8. Mélanges selon l'une des revendications 1 à 7, **caractérisés en ce que** le composé iodopropargyle est le 3-iodo-2-propynyl-butyl-carbamate (IPBC).

9. Mélanges selon l'une des revendications 1 à 8, **caractérisés en ce qu'**on utilise, comme alkylèneglycols, l'éthylèneglycol, le diéthylèneglycol, le diéthylèneglycolbutyléther, le triéthylèneglycol, le tétraéthylèneglycol, le polyéthylèneglycol, le propylèneglycol, le dipropylèneglycol, le dipropylèneglycolmonométhyléther ou le polypropylèneglycol, ainsi que des mélanges quelconques de ces composés.

10. Mélange selon l'une des revendications 1 à 9, **caractérisé en ce qu'**il contient au moins un acide.

11. Mélanges selon l'une des revendications 1 à 10, **caractérisés en ce que** les acides sont utilisés en une quantité de 0,01 à 3% en poids.

12. Mélanges selon l'une des revendications 1 à 11, **caractérisés en ce que** l'eau est utilisée en une quantité de 2 à 6% en poids, par rapport à la quantité totale du mélange.

13. Procédé de préparation des mélanges selon la revendication 1, **caractérisé en ce qu'**au moins un polymère contenant de l'azote présentant au moins deux fonctions bêta-aminoamine en une quantité de 1 à 10% en poids est mélangé avec au moins 15 à 30% en poids d'un composé iodopropargyle choisi dans le groupe 3-iodo-2-propynyl-propyl-carbamate, 3-iodo-2-propynyl-butylcarbamate (IPBC), 3-iodo-2-propynyl-m-chlorophényl-carbamate, 3-iodo-2-propynyl-phényl-carbamate, di-(3-iodo-2-propynyl)hexyldicarbamate, 3-iodo-2-propynyloxyéthanol-éthylcarbamate, 3-iodo-2-propynyl-oxyéthanol-phényl-carbamate, 3-iodo-2-propynyl-thioxo-thioéthylcarbamate, ester de l'acide 3-iodo-2-propynyl-carbamique (IPC), 3-bromo-2,3-diiodo-2-propényléthyl-carbamate, 3-iodo-2-propynyl-n-hexylcarbamate et 3-iodo-2-propynyl-cyclohexylcarbamate et avec 55 à 75% en poids d'au moins un alkylèneglycol et le cas échéant en présence d'au moins un acide et la teneur en eau est réglée à une quantité de 1,5 à 6% en poids, les quantités indiquées se rapportant à chaque fois à la quantité totale du mélange.

14. Utilisation des mélanges selon la revendication 1 pour la protection de matériaux techniques contre une dégradation ou une attaque par des micro-organismes.
